# EUROPEAN PATENT APPLICATION

(11) **EP 2 317 790 A1**
(43) Date of publication of application: **04.05.2011**
(21) Application number: 09805001.6
(22) Date of filing: 05.08.2009
(51) Int. Cl.: H04W 24/04, H04W 60/00, H04W 68/02

(54) **MOBILE COMMUNICATION METHOD, NETWORK DEVICE, AND EXCHANGE STATION**

(30) Priority: 08.08.2008 JP 2008206003
(71) Applicant: NTT DOCOMO, INC., Chiyoda-ku Tokyo 100-6150 (JP)
(72) Inventor: TANABE, Akimichi c/o NTT DOCOMO Inc., Int.Prop.Dept., Chiyoda-ku, Tokyo 100-6150 (JP); SUZUKI, Keisuke c/o NTT DOCOMO Inc., Int.Prop.Dept., Chiyoda-ku, Tokyo 100-6150 (JP)
(74) Representative: HOFFMANN EITLE
(86) International application number: PCT/JP2009/063868
(87) International publication number: WO 2010/016518

(57) **Abstract**

Provided is a mobile communication method which includes: a step in which a first exchange station MME#a allocates a temporary identifier TMSI for identifying a mobile station UE#1 to the mobile station UE#1 during a position registration process; and a step in which a network device S-GW transmits a paging request containing an permanent identifier IMSI for identifying the mobile station UE#1 to a second exchange station MME#c controlling an MME pool area #X, and the second exchange station MME#c broadcasts the paging signal containing the permanent identifier TMSI to the MME pool area #X in response to the paging request if a trouble has occurred in the first exchange station MME#a and an incoming request destined to the mobile station UE#1 is received in the network device S-GW.

## Description

### TECHNICAL FIELD

The present invention relates to a mobile communication method, a network device, and an exchange.

### BACKGROUND ART

In a mobile communication system specified by 3GPP, a circuit exchange MSC is configured to assign a mobile station UE temporary identification information TMSI (Temporary Mobile Subscriber Identity) for identifying the mobile station UE during location registration processing, and transmit a paging signal including the TMSI in response to a paging notification based on an incoming request addressed to the mobile station UE.

Furthermore, in the mobile communication system, a packet exchange SGSN is configured to assign the mobile station UE temporary identification information P-TIVISI (Packet-Temporary Mobile Subscriber Identity) for identifying the mobile station UE during location registration processing, and transmit a paging signal including the P-TMSI in response to the paging notification based on the incoming request addressed to the mobile station UE.

### SUMMARY OF THE INVENTION

### PROBLEM TO BE SOLVED BY THE INVENTION

However, conventional mobile communication systems have a problem that when a failure occurs in an exchange that have assigned the mobile station UE the TMSI or the P-TMSI the mobile station cannot receive an incoming signal unless the mobile station performs a location registration processing to another exchange.

The present invention is made in view of the above-mentioned problem and an objective of the present invention is to provide a mobile communication method, a network device, and an exchange that allow a mobile station to receive an incoming signal even when a failure occurs in an exchange to which the mobile station has performed a location registration processing.

### MEANS FOR SOLVING THE PROBLEM

A first feature of the present invention is summarized as a mobile communication method including the steps of: performing, by a mobile station, location registration processing to a first exchange that controls a pool area; assigning, by the first exchange, the mobile station temporary identification information for identifying the mobile station during the location registration processing; transmitting, by a network device, a paging notification to the first exchange when the first exchange is operating normally and an incoming request addressed to the mobile station is received by the network device, and broadcasting, by the first exchange, a paging signal including the temporary identification information in the pool area in response to the paging notification; and transmitting, by the network device, a paging notification including permanent identification information for identifying the mobile station to a second exchange that controls the pool area when a failure occurs in the first exchange and the incoming request addressed to the mobile station is received by the network device, and broadcasting, by the second exchange, a paging signal including the permanent identification information in the pool area in response to the paging notification.

A second feature of the present invention is summarized as a mobile communication method comprising the steps of: performing, by a mobile station, location registration processing to a first exchange that control a pool area and to a third exchange; assigning, by the first exchange, the mobile station temporary identification information for identifying the mobile station during the location registration processing; transmitting, by the third exchange, a paging notification to the first exchange when the first exchange is operating normally and an incoming request addressed to the mobile station is received by the third exchange, and broadcasting, by the first exchange, a paging signal including the temporary identification information in the pool area in response to the paging notification; and transmitting, by the third exchange, a paging notification including permanent identification information for identifying the mobile station to a second exchange that controls the pool area when an association between the first exchange and the third exchange is released and the incoming request addressed to the mobile station is received by the third exchange, and broadcasting, by the third exchange, a paging signal including the permanent identification information in the pool area in response to the paging notification.

A third feature of the present invention is summarized as a network device coupled to a first exchange and a second exchange that control a pool area, wherein the network device is configured to transmit a paging notification to the first exchange when the first exchange that has assigned a mobile station temporary identification information for identifying the mobile station is operating normally and an incoming request addressed to the mobile station is received by the network device, and the network device is configured to transmit a paging notification including permanent identification information for identifying the mobile station to the second exchange when a failure occurs in the first exchange and the incoming request addressed to the mobile station is received by the network device.

A fourth feature of the present invention is summarized as an exchange coupled to a first exchange and a second exchange that control a pool area, wherein the exchange is configured to transmit a paging notification to the first exchange when the first exchange that has assigned a mobile station temporary identification information for identifying the mobile station is operating normally and an incoming request addressed to the mobile station is received by the exchange, and the exchange is configured to transmit a paging notification including permanent identification information for identifying the mobile station to the second exchange when association of the exchange with the first exchange is released and the incoming request addressed to the mobile station is received by the exchange.

### EFFECT OF THE INVENTION

As described above, the present invention can provide a mobile communication method, a network device, and an exchange that allows a mobile station to receive an incoming signal even when a failure occurs in an exchange to which the mobile station has performed a location registration processing.

### BRIEF DESCRIPTION OF THE DRAWINGS

[FIG. 1] FIG. 1 is an overall configuration diagram of a mobile communication system according to a first embodiment of the present invention.
[FIG. 2] FIG. 2 is a functional block diagram of an exchange according to the first embodiment of the present invention.
[FIG. 3] FIG. 3 is a diagram for illustrating operations of the mobile communication system according to the first embodiment of the present invention.
[FIG. 4] FIG. 4 is an overall configuration diagram of a mobile communication system according to a first modified example of the present invention.
[FIG. 5] FIG. 5 is a diagram for illustrating operations of the mobile communication system according to the first modified example of the present invention.
[FIG. 6] FIG. 6 is a diagram for illustrating operations of a mobile communication system according to a second embodiment of the present invention.

### MODES FOR CARRYING OUT THE INVENTION

### (Mobile Communication System according to First Embodiment of Present Invention)

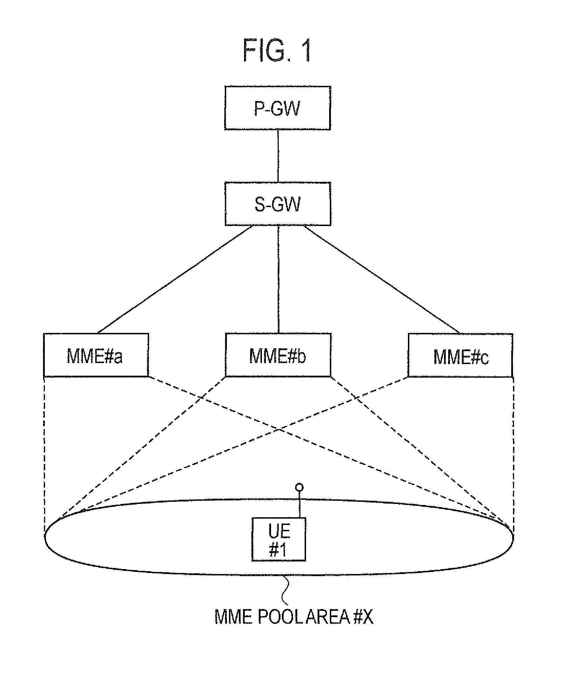

With reference to FIGS. 1 to 3, a description will be given of a mobile communication system according to a first embodiment of the present invention.

As shown in FIG. 1, the mobile communication system according to this embodiment is an LTE (Long Term Evolution) mobile communication system and includes a first gateway device P-GW (PDN-Gateway), a second gateway device S-GW (Serving-Gateway), and multiple exchange MME #a to #c which control a MME pool area #X.

In the mobile communication system according to the present embodiment, the exchange MME #a (first exchange) is configured to assign a mobile station UE #1 in the MME pool area #X temporary identification information TMSI for identifying the mobile station UE #1 during location registration processing of the mobile station UE#1 to the exchange MME #a.

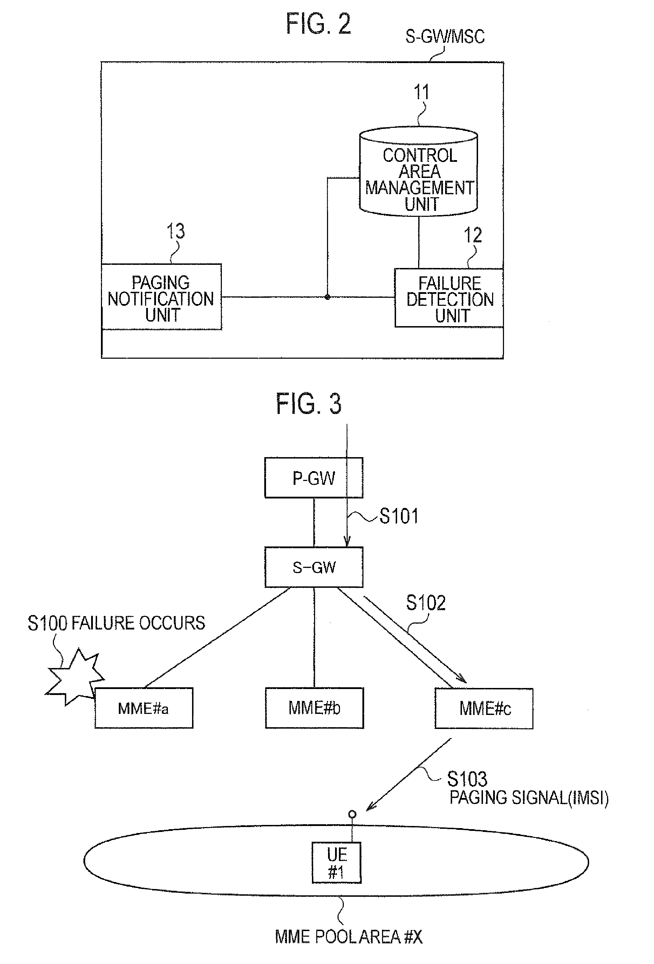

As shown in FIG. 2, the second gateway device S-GW is a network device including a control area management unit 11, a failure detection unit 12, and a paging notification unit 13.

The control area management unit 11 is configured to manage each of exchanges controlling MME pool area.

The failure detection unit 12 is configured to detect an occurrence of a failure in each exchange MME and a link with each exchange MME. Here, the failure includes an incident where each exchange MME fails and stops operating, an incident where a process load on each exchange MME exceeds a predetermined value, an incident where a link between the exchanges MME is disconnected, and an incident where traffic amount in the link between the exchanges MME exceeds a predetermined value.

The paging notification unit 13 is configured to transmit a paging notification to the exchange MME #a that has assigned the mobile station UE #1 the temporary identification information TMSI when an incoming request addressed to the mobile station UE #1 is received.

Here, the paging notification is transmitted by the second gateway device S-GW in response to the incoming request addressed to a mobile station UE and instructs each exchange MME to broadcast a paging signal in the MME pool area #X.

Note that the paging notification unit 13 is configured to transmit the paging notification to the exchange MME #a when the incoming request addressed to the mobile station UE #1 is received and the exchange MME #a is operating normally.

On the other hand, the paging notification unit 13 is configured to transmit a paging notification including permanent identification information IMSI (International Mobile Subscriber Identity) for identifying the mobile station UE #1 to the exchange MME #c (second exchange) that controls the MME pool area #X when the incoming request addressed to the mobile station UE #1 is received and a failure has occurred in the exchange MME #a.

Operations of the mobile communication system according to the first embodiment of the present invention are described below with reference to FIG. 3.

As shown in FIG. 3, in Step S100, a failure occurs in the exchange MME #a that has assigned the mobile station UE #1 the temporary identification information TMSI.

Upon receiving an incoming request addressed to the mobile station UE #1 in Step S101, the second gateway device S-GW transmits a paging notification including the permanent identification information IMSI of the mobile station UE #1 in Step S102 to the exchange MME #c controlling the MME pool area #X that is same as the one controlled by the exchange MME #a, because the failure has occurred in the exchange MME #a.

In Step S103, the exchange MME #c broadcasts a paging signal including the permanent identification information TMSI of the mobile station UE #1 in the MME pool area #X in response to the paging notification.

In the mobile communication system according to the first embodiment of the present invention, the mobile station UE #1 can receive an incoming signal when the second gateway device S-GW receives the incoming request addressed to the mobile station UE #1 and detects that a failure has occurred in the exchange MME #a to which the mobile station UE #1 has performed location registration processing by the following operations. Specifically, the second gateway device S-GW transmits the paging notification including the permanent identification information IMSI of the mobile station UE #1 to the exchange MME #c controlling the MME pool area #X that is same as the one controlled by the exchange MME #a, and the exchange MME #c broadcasts the paging signal including the permanent identification information IMSI of the mobile station UE #1 in the MME pool area in response to the paging notification.

### (First Modified Example)

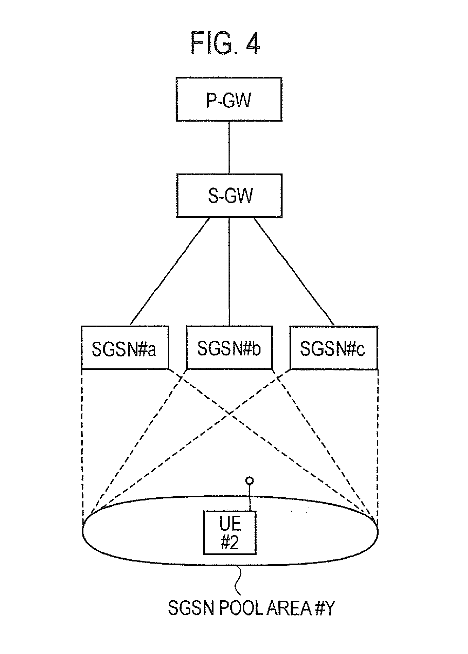

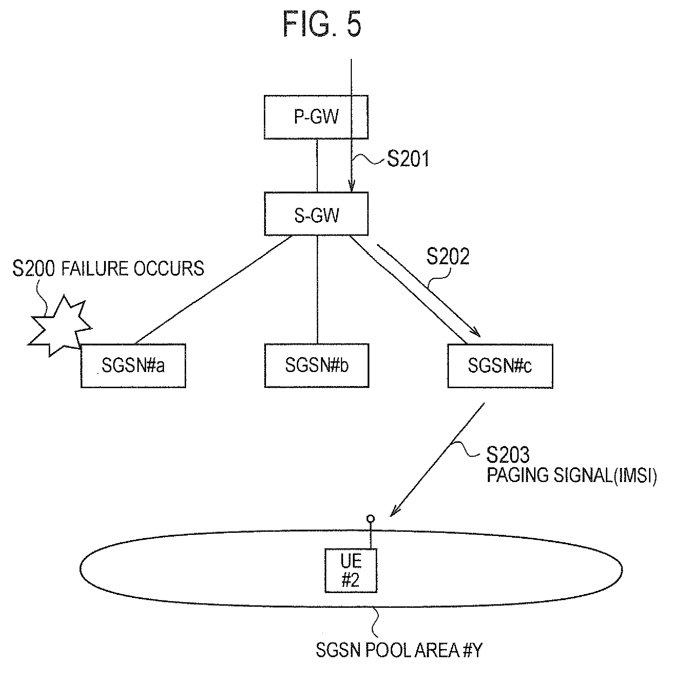

A mobile communication system according to a first modified example of the present invention is described with reference to FIG. 4 and FIG. 5. The mobile communication system according to the first modified example is described below while focusing on the difference from the mobile communication system according to the first embodiment of the present invention.

As shown in FIG. 4, the mobile communication system according to the first modified example is a WCDMA mobile communication system. The mobile communication system according to the first modified example includes a first gateway device P-GW (PDN-Gateway), a second gateway device S-GW (Serving-Gateway), and multiple packet exchanges SGSN #a to #c that control a SGSN pool area #Y.

Operations of the mobile communication system according to the first modified example are described below with reference to FIG. 5.

As shown in FIG. 5, in Step S200, a failure occurs in the packet exchange SGSN #a that has assigned a mobile station UE #1 temporary identification information P-TMSI.

Upon receiving an incoming request addressed to the mobile station UE #1 in Step S201, the second gateway device S-GW transmits a paging notification including permanent identification information IMSI of the mobile station UE #1 in Step S202 to the packet exchange SGSN #c controlling the SGSN pool area #Y that is same as the one controlled by the packet exchange SGSN #a, because the failure has occurred in the packet exchange SGSN #a.

In Step S203, the packet exchange SGSN #c broadcasts a paging signal including the permanent identification information IMSI of the mobile station UE #1 in the SGSN pool area #Y in response to the paging notification.

### (Second Modified Example)

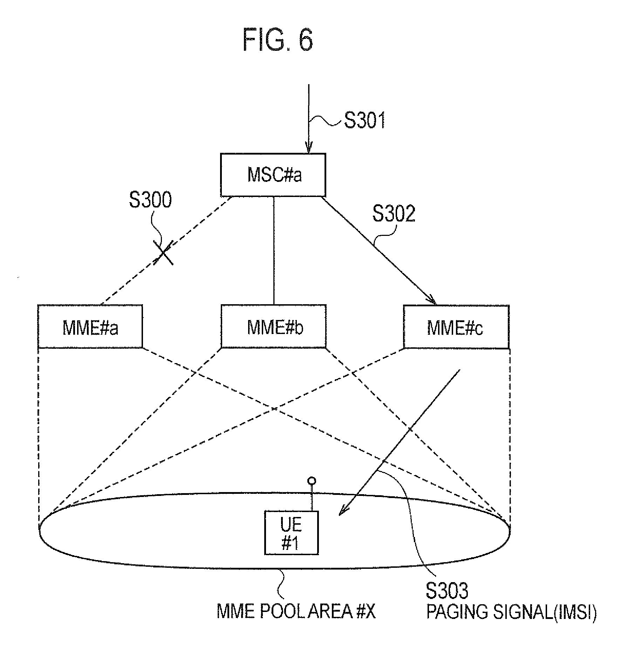

A mobile communication system according to a second modified example of the present invention is described with reference to FIG. 6. The mobile communication system according to the second modified example is described below while focusing on the difference from the mobile communication system according to the first embodiment of the present invention.

The mobile communication system according to the second modified example uses CSFB (CS Fall Back) technique.

Specifically, in the mobile communication system according to the second modified example, a mobile station UE can perform location registration processing to a WCDMA circuit exchange MME #c as well as a LTE exchange MME #a by transmitting a location registration request to the LTE exchange MME #a.

For example, as shown in FIG. 6, in the mobile communication system according to the second modified example, the circuit exchange MSC #a (third exchange) is configured to transmit a paging notification to the exchange MME #a (first exchange), and the exchange MME #a is configured to broadcast a paging signal including temporary identification information TMSI of the mobile station UE #1 in an MME pool area #X in response to the paging notification when an incoming request addressed to the mobile station UE #1 is received by the circuit exchange MSC #a and the exchange MME #a is operating normally.

As shown in FIG. 6, in Step S300, a failure occurs in a link between the exchange MME #a and the circuit exchange MSC #a that has assigned the mobile station UE #1 the temporary identification information TMSI, and thereby association between the circuit exchange MSC #a and the exchange MME #a is released.

Upon receiving an incoming request addressed to the mobile station UE #1 in Step S301, the circuit exchange MSC #a transmits a paging notification including permanent identification information IMSI of the mobile station UE #1 in Step S302 to the exchange MME #c connected to the circuit exchange MSC #a, because the association between the circuit exchange MSC #a and the exchange MME #a is released.

In Step S303, the exchange MME #c broadcasts a paging signal including the permanent identification information IMSI of the mobile station UE #1 in the MME pool area #X in response to the paging notification.

Note that operation of the above described gateway device P-GVV, S-GW, the exchange MME, the SGSN the MSC and the mobile station UE may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the gateway device P-GW, S-GW, the exchange MME, the SGSN the MSC and the mobile station UE. Also, the storage medium and the processor may be provided in the gateway device P-GW, S-GW, the exchange MME, the SGSN the MSC and the mobile station UE.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A mobile communication method comprising the steps of:
performing, by a mobile station, location registration processing to a first exchange that controls a pool area;
assigning, by the first exchange, the mobile station temporary identification information for identifying the mobile station during the location registration processing;
transmitting, by a network device, a paging notification to the first exchange when the first exchange is operating normally and an incoming request addressed to the mobile station is received by the network device, and broadcasting, by the first exchange, a paging signal including the temporary identification information in the pool area in response to the paging notification; and
transmitting, by the network device, a paging notification including permanent identification information for identifying the mobile station to a second exchange that controls the pool area when a failure occurs in the first exchange and the incoming request addressed to the mobile station is received by the network device, and broadcasting, by the second exchange, a paging signal including the permanent identification information in the pool area in response to the paging notification.

2. A mobile communication method comprising the steps of:
performing, by a mobile station, location registration processing to a first exchange that control a pool area and to a third exchange;
assigning, by the first exchange, the mobile station temporary identification information for identifying the mobile station during the location registration processing;
transmitting, by the third exchange, a paging notification to the first exchange when the first exchange is operating normally and an incoming request addressed to the mobile station is received by the third exchange, and broadcasting, by the first exchange, a paging signal including the temporary identification information in the pool area in response to the paging notification; and
transmitting, by the third exchange, a paging notification including permanent identification information for identifying the mobile station to a second exchange that controls the pool area when an association between the first exchange and the third exchange is released and the incoming request addressed to the mobile station is received by the third exchange, and broadcasting, by the third exchange, a paging signal including the permanent identification information in the pool area in response to the paging notification.

3. A network device coupled to a first exchange and a second exchange that control a pool area, wherein
the network device is configured to transmit a paging notification to the first exchange when the first exchange that has assigned a mobile station temporary identification information for identifying the mobile station is operating normally and an incoming request addressed to the mobile station is received by the network device, and
the network device is configured to transmit a paging notification including permanent identification information for identifying the mobile station to the second exchange when a failure occurs in the first exchange and the incoming request addressed to the mobile station is received by the network device.

4. An exchange coupled to a first exchange and a second exchange that control a pool area, wherein
the exchange is configured to transmit a paging notification to the first exchange when the first exchange that has assigned a mobile station temporary identification information for identifying the mobile station is operating normally and an incoming request addressed to the mobile station is received by the exchange, and
the exchange is configured to transmit a paging notification including permanent identification information for identifying the mobile station to the second exchange when association of the exchange with the first exchange is released and the incoming request addressed to the mobile station is received by the exchange.
